# EUROPEAN PATENT SPECIFICATION

(11) **EP 0 730 929 B1**
(45) Date of publication and mention of the grant of the patent: **30.05.2001**
(21) Application number: 96103678.7
(22) Date of filing: 08.03.1996
(51) Int. Cl.: B23K 35/30, B23K 35/26, C04B 37/00, C04B 41/88

(54) **Use of brazing alloy for bonding carbonaceous body and carbonaceous body coated with hard layer**
Verwendung von Hartlotlegierung zum Verbinden von kohlenstoffhaltigen Formkörper und kohlenstoffhaltiger Formkörper mit Hartstoffschicht
Usage d'alliage de brasage pour la liaison de matériaux carbonés et matériau carboné revêtu d'une couche dure

(30) Priority: 10.03.1995 JP 7989395
(43) Date of publication of application: 11.09.1996
(73) Proprietor: RESEARCH DEVELOPMENT CORPORATION OF JAPAN, Kawaguchi-shi, Saitama-ken 332 (JP); MATSUSHITA ELECTRIC INDUSTRIAL CO., LTD., Kadoma-shi, Osaka 571-8501 (JP)
(72) Inventor: Ohki, Yoshimasa, Sagamihara-shi, Kanagawa-ken, 229 (JP)
(74) Representative: Müller-Boré & Partner Patentanwälte

(56) References cited:
- EP-A- 0 332 978
- DE-A- 3 740 773
- US-A- 2 739 375
- US-A- 3 141 238
- US-A- 3 839 780
- US-A- 4 358 506
- CHEMICAL ABSTRACTS, vol. 109, no. 20, 14 November 1988 Columbus, Ohio, US; abstract no. 181116, NANBA, YOSHIO ET AL: "Sputtering targets" XP002032534 & JP 63 083 260 A (KOBE STEEL, LTD., JAPAN) 13 April 1988

## Description

The present invention relates to the use of a brazing alloy for bonding a carbonaceous body with the same body or the other body such as metal or ceramics. The alloy is useful as a hard surface layer excellent in brazing ability to be formed on the surface of the carbonaceous body, too. The invention relates further to a carbonaceous body coated with said hard layer.

Carbonaceous material has been used in various technical fields such as constructional bodies or parts for an aircraft, due to its excellent properties such as light weight, strength, good thermal conductivity and high electric conductivity. In the case where the carbonaceous material is incorporated as a constructional body or part in a plant or an apparatus, the constructional body or part made of the carbonaceous material shall be bonded to another part made of the other material. In some cases, the carbonaceous bodies or parts are bonded together on use.

Since the carbonaceous material has the difficulty on bonding, a body having the configuration required for use has been prepared by machining a big-sized carbon block. When the body having the necessary configuration is shaped out from a big-sized carbon block, the obtained carbonaceous body is very expensive due to the poor yield ratio of the material. Such expensiveness restricts the use of the obtained carbonaceous body on extremely specified fields.

It is known that the carbonaceous bodies are bonded together with heat-resistant resin or the like. Occasionally, the carbonaceous body after being bonded by the resin is heat treated at a higher temperature so as to reform the resin to the state unitarily merged with the carbonaceous body by the carbonization of the resin.

When the carbonaceous body is bonded with resinous adhesives, the bonded body can not be used in a high-temperature atmosphere, since the heat resistance of the resinous adhesives is up to 200°C at highest. The method of carburizing the resin to the state unitarily merged with the carbonaceous body needs complicated steps and has the difficulty to make up the assembly with high dimensional accuracy, since the resin becomes tar and extremely reduces its volume during carburization.

A metallic bonding material such as a solder or a brazing alloy has been used for bonding carbonaceous body in some cases. For instance, a brazing alloy based on Ag and Cu to which Ti is added in a small amount is disclosed in Report No. P014, pp.324-325, Seminar of Carbon Material Association and U.S Pat. No.2,739,375.

The method using a solder or a brazing alloy is suitable for obtaining bonded parts excellent in high-temperature strength compared with the bonding method using resinous adhesives. However, when a solder based on Zn is used, Zn vapor is formed at a high temperature. In addition, soldering conditions such as temperature and time shall be strictly controlled in order to obtain good soldered joints. Consequently, the soldering method is not practical due to working conditions. The method using a brazing alloy based on Ag has economical disadvantages in an actual manufacturing line due to the consumption of expensive Ag in a large amount.

DE 37 40 773 A relates to a method of producing electrically conductive joints by way of isothermal solidification of an intermetallic phase formed during brazing from at least one transition metal and at least one metal having a melting point that is lower than that of the transition metal, wich phase may contain indium or gallium.

US 4358506-A, dealing with the coating of graphite bodies, discloses as a coating an alloy consisting of a first metal selected among tin, lead, indium and their alloys in an amount from 60 wt% to 99 wt% and a second carbide former metal selected among chromium, titanium, hafnium, zirconium, cobalt, iron, nickel, vanadium, niobium, tantalum, tungsten, molybdenum and mixtures thereof.

The present invention is accomplished to overcome the problems mentioned above.

The object of the present invention is to easily bond a carbonaceous body with the same body or the other body such as metal or ceramics at a low cost using the Ni-In brazing alloy which can form a firmly soldered joint.

The brazing alloy which is used according to the present invention for bonding carbonaceous material has the composition mainly consisting of 23-94 at.% In and at least 6 at % Ni. The brazing alloy may contain 10 at.% or less C and/or 5 at.% or less Co. The half or less part of In may be substituted by Sn or Pb.

The carbonaceous body to be bonded using said brazing alloy may be carbon, graphite, diamond or the like. Although there are no restrictions on the kind of the metallic body to be bonded to the carbonaceous body, Cu, Al, Fe, Ni, Co, Ta or these alloy may be bonded to the carbonaceous body. Such a ceramic body as alumina, quartz, silicon carbide or silicon nitride may be bonded to the carbonaceous body, although the kind of the ceramics does not limit the scope of the present invention.

The present invention utilizes the function of Ni which can form a firm bond with carbon. Since the brazing alloy contains Ni, it does not erode the carbon body so as to obtain the brazed joint excellent in corrosion resistance, too.

The melting point of the brazing alloy is lowered below 1000°C by the addition of In. If In content is less than 23 at.%, the melting point of the brazing alloy would be too high and impede the brazing reaction with the carbonaceous body. If In content exceeds 94 at.%, the function of Ni capable of firmly bonding the carbonaceous body would be reduced so as not to obtain a brazed joint having sufficient strength. In addition, the In content in the controlled amount effectively makes the brazing alloy softer and plastic. Consequently, the carbonaceous body can be bonded at a relatively lower temperature without the affection of strain caused by the difference in thermal expansion coefficiency between the carbonaceous body and the brazing alloy.

The brazing alloy is useful as coating material applied as a hard surface layer onto the surface of the carbonaceous body, too, since the alloy exhibits excellent spreadability to the carbonaceous body. The Ni-In alloy in molten state uniformly spreads on the surface of the carbonaceous body even which has complicated configuration, so that the surface layer excellent in hardness and corrosion resistance can be formed on the surface of the carbonaceous body. The carbonaceous body can be brazed or soldered to the other body through the surface layer. The surface layer may be improved in hardness by the addition of Co.

The Ni-In alloy is prepared by weighing the predetermined amount of each component and melting them with a heat in an inert gas or reducing atmosphere.

The component C as an optional additive enhances the C concentration of the Ni-In alloy in molten state during brazing. The higher C concentration effectively suppresses the dissolution of C from the carbonaceous body to be bonded, and protects the carbonaceous body from erosion. However, if C content exceeds 10 at.%, graphite would be precipitated in the bonded joint after being cooled. The bonding strength would be reduced by the precipitation of graphite.

The component Co as an optional additive improves the hardness and mechanical strength of the bonded joint. However, if Co content exceeds 5 at.%, the effect of Co on hardness would be saturated, while the effect of In to lower the melting point would be reduced.

The substitution of a half or less part of In with Sn or Pb makes it easy to bond the carbonaceous body with a metallic body. By the the addition of Sn or Pb which has been commonly used as the component of a solder, the Ni-In alloy can be used for directly bonding the carbonaceous body with the metallic body.

Since some kinds of metallic materials cannot be bonded by using the Ni-In alloy which does not contain Sn or Pb. It would be obliged to adopt two steps, i.e. bonding the Ni-In alloy to the carbonaceous body and then bonding a metallic body with a solder. The use of the Ni-In alloy containing Sn or Pb does not necessitate said two steps, so that the carbonaceous body can be easily bonded with high efficiency. However, if the half or more part of In is substituted with Sn or Pb, the effect of In to lower the melting point would be significantly reduced.

### EXAMPLE

### Example 1:

15g Ni and 10g In were weighed and put in a clean quartz boat. The boat was set in an oven filled with nitrogen gas and then heated. In was melted at first, and Ni was gradually dissolved in the In melt. When the heating temperature reached 1000°C, molten Ni and In were completely mixed together. Hereby, a Ni-In alloy containing 25 at.% In was prepared. The Ni-In alloy was homogenized by holding it 30 minutes at 1000°C and then slowly cooled. The reaction of Ni or In with quartz was not brought out during the melting and the homogenization. The cooled alloy was cut and worked to a sheet of 0.5mm in thickness.

The obtained sheet was inserted between two polycrystalline carbon blocks and heated at 960 °C in a nitrogen atmosphere. The Ni-In alloy was melted by the heating and spreaded between the facing surfaces of the carbon blocks. Thereafter, the carbon blocks were cooled to a room temperature while holding them in the nitrogen atmosphere.

The cooled carbon blocks were taken out from the oven, and the bonded joint was observed. The carbon blocks were firmly bonded together through the thin layer of the Ni-In alloy. The bonded joint had tensile strength of 0.1 kN/mm² or more, and damage was formed in the carbon block but not the bonded joint during the tensile test. By the microscopic observation of the bonded joint, it was noted that the erosion of the carbon blocks with the Ni-In alloy was negligible.

### Example 2:

15g Ni, 10g In and 0.3g carbon flakes were weighed. After the carbon flakes were laid on the bottom of a quartz boat, Ni and In were put on the carbon flakes. The boat was set in an oven filled with nitrogen gas, heated at 1000 °C and held 30 minutes at the same temperature. All the components including C were completely melted together. The alloy prepared in this way has the composition of 70 at.% Ni, 23 at.% In and 7 at.% C. The alloy after being cooled was cut and worked to a sheet of 0.5mm in thickness.

The obtained sheet was inserted between two polycrystalline carbon blocks and heated at 960 °C in a nitrogen atmosphere. The Ni-In alloy was melted by the heating and spreaded between the facing surfaces of the carbon blocks. Thereafter, the carbon blocks were cooled to a room temperature while holding them in the nitrogen atmosphere.

The cooled carbon blocks were taken out from the oven, and the bonded joint was observed. The carbon blocks were firmly bonded together through the thin layer of the Ni-In alloy. The bonded joint had tensile strength of 0.1 kN/mm² or more, and damage was formed in the carbon block but not the bonded joint. By the microscopic observation of the bonded joint, it was noted that the erosion of the carbon blocks with the Ni-In alloy was much suppressed as compared with Example 1.

### Example 3:

15g Ni, 10g In and 1g Co were melted in the same way as in Example 1 to prepare an alloy having the composition of 71 at.% Ni, 24 at.% In and 5 at.% Co. The obtained alloy was too hard to be machined to a sheet shape by a conventional working or cutting tool. Therefore, a working tool made of cubic boron nitride was used to shape the alloy to a sheet of 0.5mm in thickness. Carbon blocks were bonded together by the sheet obtained in this way. The bonded joint had tensile strength of 1 kN/mm² or more.

### Example 4:

The flakes of the alloy obtained in Example 3 were melted and applied onto the whole surface of a carbon block. The formed surface layer had excellent adhesiveness onto the substrate carbon block and high hardness.

### Example 5:

An alloy was prepared by substituting a third of In in each of Examples 1-3 with Sn or Pb. Each alloy was used for bonding a carbon block to a copper plate. In any case, the carbon block was bonded with the copper plate by only one heating at 970°C.

### Example 6:

4g Ni and 115g In were weighed, melted with a heat and homogenized in the same way as in Example 1 to prepare an alloy having the composition of 94 at.% In and the balance being Ni. The alloy was machined to a sheet of 0.5mm in thickness.

The sheet obtained in this way was inserted between two polycrystalline carbon blocks and then heated at 650°C in a nitrogen atmosphere. The alloy was melted and spreaded onto the facing surfaces of the carbon blocks. Thereafter, the carbon blocks were cooled to a room temperature, while holding them in the nitrogen atmosphere.

The carbon blocks after being cooled were taken out from the oven, the bonded joint was observed. The carbon blocks were firmly bonded together through the thin layer of the Ni-In alloy. The bonded joint had tensile strength of 0.06 kN/mm². By the microscopic observation of the bonded joint, it was noted that the erosion of the carbon blocks with the Ni-In alloy was negligible.

According to the present invention as aforementioned, a carbonaceous body is bonded with the same body or the other body such as metal or ceramics at a relatively lower temperature by using an alloy mainly composed of Ni and In. The alloy may contain other alloying elements such as C, Co, Sn or Pb. The alloy exhibits various properties in response to the kind of these additives, to satisfy the requisitions for uses.

## Claims

1. A use of a brazing alloy for bonding carbonaceous material consisting of 23-94 at.% In and at least 6 at.% Ni; wherein optionally the alloy comprises 10 at.% or less C and/or 5 at.% or less Co; and wherein optionally in the alloy the half or less part of In is substituted by Sn or Pb.

2. A carbonaceous body coated with a hard layer composed of the alloy consisting of 23-94 at% In and at least 6 at% Ni; wherein optionally the alloy comprises 10 at% or less C and/or 5at% or less Co ; and wherein optionally in the alloy the half or less part of In is substituted by Sn or Pb.

## Patentansprüche

1. Verwendung einer Hartlotlegierung zum Binden kohlenstoffhaltigen Materials, bestehend aus 23 - 94 At.-% In und mindestens 6 At.-% Ni, wobei wahlweise die Legierung 10 At.-% oder weniger C und/oder 5 At.-% oder weniger Co enthält und wobei wahlweise in der Legierung die Hälfte oder ein geringerer Teil des In durch Sn oder Pb substituiert ist.

2. Kohlenstoffhaltiger Formkörper, der mit einer harten Schicht überzogen ist, die aus einer Legierung bestehend aus 23 - 94 At.-% In und mindestens 6 At.-% Ni zusammengesetzt ist, wobei wahlweise die Legierung 10 At.-% oder weniger C und/oder 5 At.-% oder weniger Co enthält und wobei wahlweise in der Legierung die Hälfte oder ein geringerer Teil des In durch Sn oder Pb substituiert ist.

## Revendications

1. Utilisation d'un alliage de brasage pour la liaison d'un matériau carboné consistant en une quantité de 23 à 94 % at. de In et une quantité d'au moins 6 % at. de Ni, dans laquelle, facultativement, l'alliage comprend une quantité égale ou inférieure à 10 % at. de C et/ou une quantité égale ou inférieure à 5 % at. de Co ; et dans laquelle, facultativement, dans l'alliage, une quantité égale ou inférieure à la moitié du In est remplacée par Sn ou Pb.

2. Corps carboné revêtu d'une couche dure formée de l'alliage consistant en une quantité de 23 à 94 % at. de In et une quantité d'au moins 6 % at. de Ni ; dans lequel, facultativement, l'alliage comprend une quantité égale ou inférieure à 10 % at. de C et/ou une quantité égale ou inférieure à 5 % at. de Co ; et dans lequel, facultativement, dans l'alliage, une quantité égale ou inférieure à la moitié du In est remplacée par Sn ou Pb.
